# EUROPEAN PATENT SPECIFICATION

(11) **EP 3 374 759 B1**
(45) Date of publication and mention of the grant of the patent: **24.03.2021**
(21) Application number: 16798839.3
(22) Date of filing: 09.11.2016
(51) Int. Cl.: G01N 21/85, G01N 21/15

(54) **GAZ ANALYZER WITH PROTECTION FOR OPTICAL COMPONENTS**
GASANALYSATOR MIT SCHUTZ FÜR OPTISCHE KOMPONENTEN
ANALYSEUR DE GAZ AVEC PROTECTION POUR COMPOSANTS OPTIQUES

(30) Priority: 09.11.2015 NO 20151519
(43) Date of publication of application: 19.09.2018
(73) Proprietor: Neo Monitors AS, 2019 Skedsmokorset (NO)
(72) Inventor: FLOOR, Karsten Brink, 9560 Hadsund (DK)
(74) Representative: Acapo AS
(86) International application number: PCT/NO2016/050224
(87) International publication number: WO 2017/082738

(56) References cited:
- EP-A2- 2 416 146
- WO-A1-2015/193374
- CN-A- 103 344 591
- DE-A1- 4 443 016
- US-A1- 2003 090 667

## Description

### TECHNICAL FIELD

The present invention relates to an optical gas analyzer for analysis of gaseous media, in particular to a gas analyzer comprising protection of optical components in a hostile medium.

### TECHNICAL BACKGROUND

In any process relying on a combustion process it is important to know the concentration of some key gas components such as Oxygen, Carbon Monoxide, Nitrogen Oxide, Hydrogen Sulphide, Sulphur Dioxide, Methane and others for process control, emission reporting and safety reasons. These gas components can be measured at different locations representing different stages of the combustion process. This means that the conditions experienced at the different locations can vary a lot in terms of temperature level and dust load and the concentration of the various gas components in the medium. However regardless of the measuring point and the process conditions accuracy, response time and run factor of the analysis equipment is having major impact on the usability and quality of the measurement. Two main methods are today used in gas analysis technologies in order to achieve the desired measurements; In Situ and Extractive analysis. Both technologies at its present technological stage represent solutions with individual benefits compared to each other.

In Situ analysis systems in the past typically represented benefits in the areas of: faster response time, lower impact on the measured gas, lower cost of investment, installation, operations and maintenance, low contamination of the analysis system, capability to measure hot/wet and compensate for e.g. the water content by analyzing the actual value. However In Situ systems in the past typically suffered in the areas of; limitation in handling high dust applications, lack of easy calibration and validation, limited number of gas analysis components measured in one unit, lack of availability of specific gas analysis components.

Extractive analysis systems in the past typically represented benefits in the areas of; High dust level gas analysis, easy calibration and validation, more or less unlimited availability of specific gas analysis components, easy integration of different technologies into one system, capability to measure both hot/wet and cold/dry depending on application. However Extractive systems in the past are typically suffering in the areas of; Slower response time, potential impact on the measured gas, higher cost of investment, installation, operation and maintenance, potential contamination of the sample system, a more complex system design and a higher level of maintenance is required.

Several efforts to make a new analysis setup utilizing the various benefits of the two methods have already been attempted with various capabilities as a result. However none of these attempts have been able to find a successful solution which provides a fast response time, a no-impact on the measured gas in high dust level processes. In all previous systems which has a similar filter construction to this suggestion and a forced gas flow through this filter has not been able to protect any optical parts from getting in direct contact with the gas and by that prevent a potential contamination of optical parts as this suggested invention is capable of doing. Other similar systems utilizing a filter combined with purge gas capabilities to protect the analyzer optics like the invention suggested here is however not been able to force the gas through the filter into the analyzing area as they all have been equipped with one or several openings in the filter wall in order to vent out the purge gas and therefore as a result depended on a process flow in the gas medium in which they are analyzing in order to analyze correctly.

The patent application JPH11295213A regards protection of optical components from pollution related to optical In Situ measurements of emissions gases in a furnace. In this application, a transparent glass surface in front of a photo detector and glass surface in front of a flood lighting projector are prevented from contamination by forced circulation of gas in front of the glass surfaces through a pipe system with opposing spout and suction ports.

The German patent application DE 1673230 A1 describes an apparatus for measurement of particulates in the exhaust from diesel engines. Figure 1 of the patent publication describes the measurement concept. The apparatus comprises a light source 9 and a light sensitive detector 10. The signal measured on the detector 10 varies depending on the amount of light from the light source 9 reaching the detector. The exhaust from the diesel engine will contain varying amounts of particles depending on how the engine is operated. A higher concentration of particles, or higher smoke density, gives less light on the detector and correspondingly lower detector signal.

The apparatus is arranged so that the exhaust gas 1 comprising both particles and gases enters the measurement tube 1. The detector and the light source are kept clean using the most common method in this field based on clean purge air. A pump 3 forces clean air into the system and this air is directed to the front of the optical components, purging the surfaces to avoid build-up of sediments from the particles. The optical components are kept clean using purged air, but the measurement chamber or tube of the system will contain all parts of the exhaust including particulates which is what the apparatus is meant to measure. However, this can cause build-up of sediments of particulates in the measurement chamber.

A system according to the current invention is designed to keep the particles outside of the measurement chamber to be capable of operation in process gases with a high dust load.

The European patent application EP 1944598 A1 describes an "Elongated exhaust gas probe". Figure 1 of this patent publication describes the arrangement. Process gas is drawn into a measurement space 7 via a filter 3. The filter 3 blocks particulates from entering the measurement space which also ensures that optical components and the inner surface of the measurement space are kept free of particulate deposits. However, optical surfaces are exposed to the process gas which could lead to etching or otherwise damages to the optical components in cases where the process gas contains corrosive or sticky gases. EP 1944598 A1 to solves this by heating the environment of a measurement housing to prevent formation of condensate which could lead to corrosion - see paragraph [0010] and claim 15. In this way the corrosive gases are not deposited on the optical surfaces by condensation and thereby the risk of damaging the optical surfaces is reduced.

EP2416146 A2 discloses a probe for gas analysis. An arrangement according to the current invention purges the optical surfaces with clean air to protect them from etching and at the same time reduces power consumption of the device. However, this could in the normal case lead to dilution of the gas to be measured resulting in false reading. This has been solved in the current invention by a combined purge and suction scheme materialized in features in both ends of the probe.

Thus there is a need for a method of making gas analysis possible without contaminating the optical system having a fast response time at a high run factor with none impact on the measured gas in a processes with high dust levels as this will provide a major benefit in the usability and quality of the analytical result in a large number of applications in various industries with lower maintenance cost for the end user.

### SUMMARY OF THE INVENTION

Solution to the above problems is provided by the gas analyzer defined in claim 1, and by the method of using it defined in claim 8. The apparatus described in this invention will take all the normal general benefits of an In Situ system and add the capability to prevent contamination of an optical analyzer system and the capability to handle high dust loads with a fast response time. The system will furthermore be simple to calibrate or validate during operation behind the pressure control chamber filter walls. The layout of the system is designed so it is capable of taking advantage of existing and the expected new releases of light based analyzers capable of measuring new gas components e.g. developments within laser based analyzers and others.

The apparatus comprises an analyzer positioned outside the environment to be analyzed and an elongate volume with walls that filters the medium to be analyzed so that dust and other particles are prevented from entering said volume. In front of an optical face is a cushion body of protecting gas, e.g. air or a gas such as nitrogen. Between this cushion and the medium to be analyzed is a volume that extracts both said protecting gas and gas medium from the volume to be analyzed. In this way, the gas to be analyzed is forced through the filter while leaving unwanted dust and other particles on the outside of the filter. At the same time, optical faces are kept from possible contamination by a neutral cushion.

Optical components at each longitudinal end of the pipe are used for the measurements. A purging chamber comprising a gas inlet is positioned on both longitudinal sides between the optical components and the suction chamber. The purging chamber is prepared for producing a gas cushion with a gas cushion medium of purge gas. This gas may be e.g. clean air for protecting optical components from corrosive components in the process gas. A suction chamber comprising a gas outlet is positioned between the purging chamber and the measurement chamber. This suctions chamber is prepared to produce a suction scheme for generally preventing the gas cushion medium from entering the measurement chamber.

In another preferred embodiment, the gas inlet is in gas communication with a peripheral circular annulus comprised in the purging chamber. The annulus comprises an inward oriented circular slit operating as a valve with some resistance to a flow of gas, prepared to producing a circularly symmetrical gas cushion protecting the optical components from corrosive components in the process gas.

In another preferred embodiment, of the gas analyzer, the gas inlet is in gas communication with a peripheral circular annulus comprised in the purging chamber. The annulus comprises circularly symmetrically positioned valves with some resistance to a flow of gas and prepared to producing a circularly symmetrical gas cushion. This gas cushion is intended to protect the optical components from corrosive components in the process gas.

In yet another preferred embodiment of the invention, the gas outlet is in gas communication with a peripheral circular annulus comprised in the suction chamber. The annulus comprises an inward oriented circular slit operating as a valve and with some resistance to a flow of gas, prepared to removing excess purge gas circularly symmetrical from the gas cushion in order to prevent this excess purge gas from entering the measurement chamber.

In still another preferred embodiment, the gas analyzer, the gas outlet is in gas communication with a peripheral circular annulus comprised in the suction chamber. The annulus comprises circularly symmetrically positioned valves with some resistance to a flow of gas being prepared to removing excess purge gas circularly symmetrical from the gas cushion. This is to prevent this excess purge gas from entering the measurement chamber.

The gas analyzer is prepared to clean said filter wall by applying high pressure purge gas, e.g. gas with more than 2 bars, to the inlet.

The gas analyzer is prepared for in situ calibration by introducing a reference gas into the measurement chamber from at least one of the gas outlet and the gas inlet.

According to the invention, a method for using the gas analyzer is provided. This is done by applying an over pressure to the purge gas supplied to the purging chamber through the gas inlet. Further on, applying an under pressure to the gas, e.g. a mixture of purge gas and process gas, from the gas outlet resulting in the gas-flow being sucked out of the suction chamber through the outlet being higher than the gas-flow of the purge gas supplied to the gas inlet (21).

In yet another preferred embodiment of the invention, a method is provided for the gas-flow being sucked out of the suction chamber through the outlet being more than 100 percent higher than the gas-flow of purge gas supplied to the gas inlet.

In still another preferred embodiment of the invention, a method is provided for the gas-flow being sucked out of the suction chamber through the outlet being more than 200 percent higher than the gas-flow of purge gas supplied to the gas inlet.

### BRIEF DESCRIPTION OF THE DRAWINGS

An example of the invention will now be described in detail with reference to the accompanying drawings in which:
Fig. 1 shows a cross section view of the apparatus of the invention in normal operation;
Fig. 2 shows the same view of the invention as in Fig. 1, but arrows indicate how clean gas moves and how the gaseous media to be analyzed moves related to the different parts of the invention; and
Fig. 3 shows a cross section view of the apparatus of the invention where a reference gas is used to calibrate the invention or blow back gas used to clean the filter of the invention.

All the figures are schematic, not necessary to scale, and generally only show parts which are necessary in order to elucidate the invention, wherein other parts may be omitted or merely suggested.

### REFERENCE SIGNS RELATED TO THE DRAWINGS

| | |
|---|---|
| 1 | Gas analyzer |
| 2 | Optical beam |
| 3 | Pipe |
| 4 | Measurement chamber |
| 5 | Filter wall |
| 21 | Gas inlet |
| 22 | Gas outlet |
| 61 | Optical transmitter |
| 62 | Optical element |
| 63 | Optical reflector |
| 64 | Optical receiver |
| -2P | Gas mix |
| -P | Process gas without particulates |
| P | Process gas |
| +P | Clean gas |
| A | Purging chamber |
| B | Suction chamber |

### DETAILED DESCRIPTION

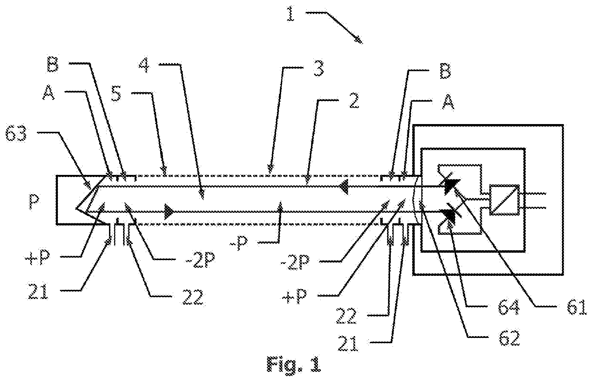

A preferred embodiment of the apparatus of the invention will now be presented with reference to Fig. 1.

A filter wall 5 of a pipe 3 separates a surrounding process gas P to be analyzed from a measurement chamber 4 in which actual measurements are performed. Contrary to the part of the wall of pipe 3 surrounding the measurement chamber 4, the part of the wall of pipe 3 surrounding a purging chamber A and a suction chamber B is preferably non-permeable for gases.

A light based in-situ analyzer 1 is only able to operate if the light 2 can get through the process gas in the entire measuring path. If a dust load is too high analysis is not possible.

A gas penetrable filter wall 5 of a pipe 3 can establish a dust free measuring path inside pipe core and solves the problem of passing light inside a process with high dust density.

The pressure in the measurement chamber 4 is lower than outside the pipe 3 in the surrounding process gas P. Besides the difference in pressure, the surrounding process gas P and the process gas without particulates -P to be analyzed differs generally in that the filter wall 5 filters the process gas P so that dust and other particles are left out from the process gas without particulates to be analyzed -P. The difference in pressure forces gas contents of process gas P through the filter wall 5 and reduces any delay in moving the process gas P to the measurement chamber 4. An optical beam 2 is transmitted from the optical transmitter 61 inside the pipe 3 in the direction of the axis of the pipe 3. The optical beam 2 passes through an optical component 62, passes a purging chamber A, a suction chamber B and then enters the measurement chamber 4. It then passes through a second suction chamber B and a second purging chamber A. Thereafter the beam 2 gets reflected in an optical reflector 63 and the optical beam 2 returns in the opposite direction and finally arrives at an optical receiver where the beam 2 is converted to an electrical signal that is analyzed in a way that is known in the art. The optical reflector is typically a corner reflector well known in the field.

Optical components facing the measurement chamber 4 are prepared to be protected by a cushion of clean gas +P. The volume where the cushion of clean gas +P is prepared to be positioned is referenced purging chamber A. The clean gas +P is introduced through a gas inlet 21. Not presented in the drawings is how the gas coming from the inlet 21 gets distributed in purging chamber A. In order for the cushion to operate according to the invention, it is desirable to distribute the gas evenly around the circumference of the purging chamber A. There are different ways known in the field how to distribute gas evenly around a cross section of a pipe and this is not shown in detail in the drawings. One way is to arrange a channel along the inner wall circumference of the pipe 3, perpendicular to the axis of the pipe 3 and connected to the gas inlet 21. The protecting gas comes from the gas inlet 21, moves to said channel and then penetrates a diffusor curtain on the inside of said channel on its way towards the axis of the purging chamber A in the pipe 3.

In the measurement chamber 4, between the purging chamber A intended for a gas cushion and the measurement chamber 4, is a suction chamber B. In operation, gas from the gas cushion as well as process gas without particulates -P are sucked into the suction chamber B. The construction of suction chamber B is similar to that of the purging chamber A. In a typical example, a channel, not presented in the drawings, is arranged along the inner wall circumference of the pipe 3 perpendicular to the center of the pipe 3 and connected to the gas outlet 22. Both clean gas +P from the purging chamber A and process gas without particulates -P from the measurement chamber 4 are sucked out through an infuser curtain on the inside of the channel and further through the gas outlet 22.

Condensing or sticking gasses in the process gas can contaminate the optical parts of a light based in-situ analysis system.

A properly designed purging section in front of the optical parts in each end of the probe is solving the problem of process gas getting in contact with the surfaces of the optical components and thereby potentially contaminating these which in turn will prevent the light of the analyzer to pass freely.

However, purge gas mixing with process gas meant for analysis inside the filter will result in false analysis results.

Clean gas +P from the purging chamber A must continuously be removed so that the clean gas +P does not mix with the process gas -P inside the measurement chamber 4 making the measurements false.

A properly designed suction chamber B in each end of the probe pipe 3 between the purging chamber A and the measurement chamber 4 solves the problem of mixing clean gas +P with process gas without particulates -P.

There is not necessarily any physical wall between the purging chamber A, the suction chamber B and the measurement chamber 4 in the pipe 3. The transversal walls indicated by vertical lines, without reference numbers in the drawings, between the suction chambers B and respective purging chamber A and measurement chamber 4 can be envisioned as "virtual walls" symbolizing that, in normal operation, gas generally does not migrate from the process gas without particulates -P to the clean gas +P nor does gas from the cushion with clean gas +P migrate with the process gas without particulates -P except inside the suction chamber as a gas mix - 2P.

The pressure of the gas mix -2P being lower than both in the clean gas +P and in the process gas without particulates -P also reduces the gas volume/pressure needed to create a gas cushion in front of the optical element and the optical reflector makes sure that the measuring path length inside the measurement chamber 4 is defined at a fixed value.

In operation, the operation of the "virtual walls" is controlled by a controller, not indicated in the drawings, by controlling the flow of gas through inlets 21 and outlets 22. The pressure of gas media -2P, -P, P and +P may advantageously be used as inputs to the controller.

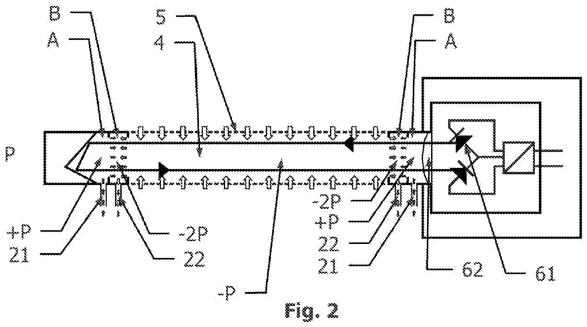

In Fig. 2 is illustrated the gas analyzer 1 when analyzing gas. The arrows indicated with a white interior refer to gas from the gaseous medium P entering through the filter wall 5 and into the measurement chamber 4. The arrows with white interior then pass the virtual walls and into the suction chambers B. In the end these arrows exit through gas outlets 22 and do not reach the optical components 61, 62.

In Fig. 2 is also presented the clean gas +P, indicated with black arrows, flowing through the gas inlet and into the purging chambers A. This gas cushion medium continues through the virtual wall between chambers A and B and leaves suction chamber B through gas outlet 22 together with the.

Process gas without particulates -P in measurement chamber 4 does not enter the purging chamber A.

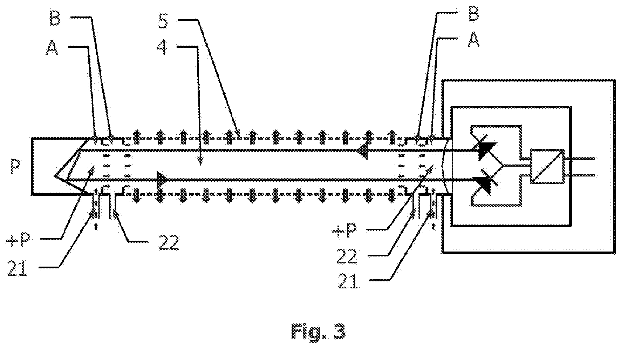

Now with reference to Fig. 3. By registering the pressure of the gaseous medium P and of the pressure of the process gas without particulates -P, the controller may be used to monitor a build-up of dust and other particles on the filter wall 5 outside of the measurement chamber due to the fact that the pressure difference between said two pressures represents the build-up of dust and other particles.

If the build-up of dust and other particles on the filter wall 5 reaches a predetermined level, it is optionally possible to stop the normal gas analysis operation, and instead start a cleaning operation to clean the filter wall 5. This can be done by introducing a cleaning gas, e.g. air, nitrogen or some other gas, to the measurement chamber 4 through either or both of the gas inlet 21 and the gas outlet 22. This gas may then blow back and away dust and other particles when the gas penetrates the filter wall 5 with sufficient force the opposite way of when performing normal gas analysis.

As indicated in Fig. 3, the gas analyzer 1 may be validated and calibrated by introducing a reference gas into the pressure chamber 4 from at least one of the gas outlet 22 and the gas inlet 21. The introduction of the reference gas shall lead to an over pressure inside the measurement chamber 4 related to the environment outside the filter wall 5 in order to fill up the measurement chamber 4 with reference gas.

The gas analyzer 1 of the present invention is described with an optical reflector reflecting the optical beam 2 to the opposite direction. In an equivalent alternative preferred embodiment of the invention, not presented in the drawings, the optical reflector 63 is not present, but instead the optical receiver is position on the opposite side of the axis of pipe 3 to where the optical transmitter 61 is positioned. In this way the optical beam 2 passes the pipe 3 just once before it gets analyzed.

In another preferred embodiment of the invention, dust particles that may deteriorate the operation of the gas analyzer are not present in the gaseous medium. In this case, the filter wall 5 is not deployed, and the cushion produced by purging chamber A, suction chamber B, gas inlet 21 and gas outlet 22 is used just for the protection of optical components 62, 63 as described previously.

For the optical light based in-situ analyzer to calculate the actual concentration of process gas that passes, it is required to know the actual distance that the light travels through the process gas without particulates -P.

If the purging chamber A in front of the optics and suction chamber B between the purging chamber A and the measurement chamber 4 is not well defined, the length of the process gas inside the probe/filter construction is undefined.

To solve the problem of defining the length of the path of the measurement chamber 4 that the process gas occupies, a specific design defining the purge feed through the purge gas inlet 21 and the suction outlet 22 must be provided.

The details of chamber A,in the following two paragraphs are not depicted in the drawings. In the present invention, the gas inlet 21 of the purging chamber A is in gas communication with a peripheral circular annulus comprised in the purging chamber A. This volume is further on in gas communication with the purging volume in the center of chamber A through a circularly symmetrical valve e.g. a circular slit, a number of apertures or similar, in order to evenly distribute a gas cushion medium inside the purging chamber A. In other words, this operates as a built-in circular nozzle in front of the optics designed to protect the optics and push the purge gaseous medium in the direction towards the measurement chamber. The purging chamber A and the sucking chamber B are in gas communication with each other perpendicularly to the centre axis of the pipe 3.

Similarly, the gas outlet 22 of the sucking chamber B is in gas communication with a peripheral circular annulus comprised in the sucking chamber B. This volume further on is in gas communication with the sucking volume of chamber B through a circularly symmetrical valve e.g. a circular slit, a number of apertures or similar in order to evenly suck out the gas from the clean gas +P from the purging chamber A. In other words, this operates as a built-in circular hoover sucking out the clean gas +P from the purging chamber A and prevent this gaseous medium to enter the measurement chamber 4. For the present invention it is also of importance that the suction gas comprises gaseous medium from the measurement chamber in order to ensure the gaseous medium outside the pipe 3 moves through the filter wall 5 to the measurement chamber 4.

Finally, a working ratio between the gas-flow of purge gas per second through the gas inlets 21 which is required compared to the gas-flow suction gas per second through the gas outlets 22 which is required in order to make a well-defined purge zone and a well-defined process gas zone for the light based in-situ analyzer to operate is important. The difference between the gas-flow out of the outlets 22 and the inlets 21 defines the gas-flow through the filter wall and into the measurement chamber.

The ratio between the suction volume and the purge volume must be more than one-to-one, and preferably more than one-to-two or more.

## Claims

1. Gas analyzer (1) for optical in situ measurements of process gas comprising dust and other particles, the gas analyzer (1) comprising,
a pipe (3);
a measurement chamber (4), prepared for measurement of process gas, in the center of the pipe (3); and
optical components (61, 62, 63, 64) at each longitudinal end of the pipe (3), **cha**
**racterized by**
the pipe (3) comprising a filter wall (5) separating the surrounding process gas (P) from the measurement chamber (4) such that the dust and other particulates are left out as process gas without particulates (-P) moves to the measurement chamber (4);
a purging chamber (A) comprising gas inlet (21), positioned on both longitudinal sides between the optical components (62, 63) and suction chamber (B), prepared for producing a gas cushion with a clean gas (+P), for protecting optical components (62, 63) from corrosive components in the process gas without particulates (-P);
a suction chamber (B) prepared to produce a suction scheme for the clean gas (+P) from the purging chamber (A) and the process gas without particulates (-P) from the measurement chamber (4) forming in the suction chamber (B) a gas mix (-2P), and thereby generally preventing the clean gas (+P) from entering the measurement chamber (4), the suction chamber (B) comprising gas outlet (22), positioned between the purging chamber (A) and the measurement chamber (4), prepared to produce a suction scheme for generally preventing the clean gas (+P) from entering the measurement chamber (4); and
a controller controlling flow of gas through the inlets (21) and the outlets (22), wherein the pressure of gas media (-2P, -P, P, +P) is used as inputs to the controller.

2. Gas analyzer (1) according to claim 1, the gas inlet (21) being in gas communication with a peripheral circular annulus comprised in the purging chamber (A), the annulus comprising an inward oriented circular slit operating as a valve, prepared to producing a circularly symmetrical gas cushion protecting the optical components (62, 63) from corrosive components in the process gas without particulates (-P).

3. Gas analyzer (1) according to claim 1, the gas inlet (21) being in gas communication with a peripheral circular annulus comprised in the purging chamber (A), the annulus comprising circularly symmetrically positioned valves, prepared to producing a circularly symmetrical gas cushion protecting the optical components (62, 63) from corrosive components in the process gas without particulates (-P).

4. Gas analyzer (1) according to one of claims 1 to 3, the gas outlet (22) being in gas communication with a peripheral circular annulus comprised in the suction chamber (B) the annulus comprising an inward oriented circular slit operating as a valve, prepared to removing excess purge gas circularly symmetrical from the gas cushion in order to prevent this excess purge gas from entering the measurement chamber (4).

5. Gas analyzer (1) according to one of claims 1 to 3, the gas outlet (22) being in gas communication with a peripheral circular annulus comprised in the suction chamber (B) the annulus comprising circularly symmetrically positioned valves being prepared to removing excess purge gas circularly symmetrical from the gas cushion in order to prevent this excess purge gas from entering the measurement chamber (4).

6. Gas analyzer (1) according to one of claims 1 to 5, prepared to clean said filter wall (5) by applying high pressure purge gas, e.g. more than 2 bars, to the inlet (21).

7. Gas analyzer (1) according to one of claims 1 to 6, prepared for in situ calibration by introducing a reference gas into the measurement chamber (4) from at least one of the gas outlet (22) and the gas inlet (21).

8. Method for using a gas analyzer according to claim 1, **characterized by** the following steps,
applying an over pressure to the clean gas (+P) supplied to the purging chamber (A) through the gas inlet (21);
applying an under pressure to the gas mixture (-2P) of purge gas and process gas without particulates (-P) from the gas outlet (22) of the suction chamber (B) that results in the gas-flow being sucked out of the suction chamber (B) through the outlet (22) being higher than the gas-flow of the purge gas supplied to the gas inlet (21); and using the controller to control the flow of gas through the inlets (21) and the outlets (22), using the pressure of gas media (-2P, -P, P, +P) as inputs to the controller so as to prevent the clean gas (+P) from entering the measurement chamber, and for protecting the optical components (62, 63) from corrosive components in the process gas without particulates (-P).

9. Method according to claim 8, the gas-flow being sucked out of the suction chamber (B) through the outlet (22) being more than 100 percent higher than the gas-flow of purge gas supplied to the gas inlet (21).

10. Method according to claim 8, the gas-flow being sucked out of the suction chamber (B) through the outlet (22) being more than 200 percent higher than the gas-flow of purge gas supplied to the gas inlet (21).

## Patentansprüche

1. Gasanalysator (1) für optische in-situ-Messungen von Prozessgas, das Staub und andere Partikel enthält, wobei der Gasanalysator (1) umfasst,
ein Rohr (3);
eine Messkammer (4), die für eine Messung von Prozessgas vorbereitet ist, in der Mitte des Rohrs (3); und
optische Komponenten (61, 62, 63, 64) an jedem Längsende des Rohrs (3), **gekennzeichnet durch**:
das Rohr (3) umfasst eine Filterwand (5), die das umgebende Prozessgas (P) von der Messkammer (4) trennt, sodass der Staub und andere Schwebstoffteilchen ausgelassen werden, wenn sich Prozessgas ohne Schwebstoffteilchen (-P) zu der Messkammer (4) bewegt;
eine Spülkammer (A), die einen Gaseinlass (21) umfasst ist, an beiden Längsseiten zwischen den optischen Komponenten (62, 63) und einer Saugkammer (B) angeordnet und ist dazu ausgebildet, ein Gaspolster mit einem Reingas (+P) zu erzeugen, um die optischen Komponenten (62, 63) vor korrosiven Komponenten in dem Prozessgas ohne Schwebstoffteilchen (-P) zu schützen;
eine Saugkammer (B) ist dazu ausgebildet, ein Saugschema für das Reingas (+P) aus der Spülkammer (A) und das Prozessgas ohne Schwebstoffteilchen (-P) aus der Messkammer (4), die in der Saugkammer (B) ein Gasgemisch (-2P) bilden, zu erzeugen, und verhindert **dadurch** generell, dass das Reingas (+P) in die Messkammer (4) eintritt, wobei die Saugkammer (B) einen Gasauslass (22) umfasst, der zwischen der Spülkammer (A) und der Messkammer (4) positioniert ist und darauf vorbereitet ist, ein Saugschema zu erzeugen, um generell zu verhindern, dass das Reingas (+P) in die Messkammer (4) eintritt; und
ein Steuergerät steuert, das den Gasfluss **durch** die Einlässe (21) und die Auslässe (22) steuert, wobei der Druck der Gasmedien (-2P, -P, P, +P) als Eingaben in das Steuergerät verwendet wird.

2. Gasanalysator (1) nach Anspruch 1, wobei der Gaseinlass (21) in Gasverbindung mit einem peripheren kreisförmigen Ringraum steht, der in der Spülkammer (A) enthalten ist, wobei der Ringraum einen nach innen gerichteten kreisförmigen Schlitz umfasst, der als ein Ventil wirkt und darauf vorbereitet ist, ein kreisförmig symmetrisches Gaspolster zu erzeugen, das die optischen Komponenten (62, 63) vor korrosiven Komponenten in dem Prozessgas ohne Schwebstoffteilchen (-P) schützt.

3. Gasanalysator (1) nach Anspruch 1, wobei der Gaseinlass (21) in Gasverbindung mit einem peripheren kreisförmigen Ringraum steht, der in der Spülkammer (A) enthalten ist, wobei der Ringraum kreisförmig symmetrisch angeordnete Ventile umfasst, die dazu ausgebildet sind, ein kreisförmig symmetrisches Gaspolster zu erzeugen, das die optischen Komponenten (62, 63) vor korrosiven Komponenten in dem Prozessgas ohne Schwebstoffteilchen (-P) schützt.

4. Gasanalysator (1) nach einem der Ansprüche 1 bis 3, wobei der Gasauslass (22) in Gasverbindung mit einem peripheren kreisförmigen Ringraum steht, der in der Saugkammer (B) enthalten ist, wobei der Ringraum einen nach innen gerichteten kreisförmigen Schlitz umfasst, der als ein Ventil wirkt, das dazu ausgebildet ist, überschüssiges Spülgas kreisförmig symmetrisch aus dem Gaspolster zu entfernen, um zu verhindern, dass dieses überschüssige Spülgas in die Messkammer (4) eintritt.

5. Gasanalysator (1) nach einem der Ansprüche 1 bis 3, wobei der Gasauslass (22) in Gasverbindung mit einem peripheren kreisförmigen Ringraum steht, der in der Saugkammer (B) enthalten ist, wobei der Ringraum kreisförmig symmetrisch angeordnete Ventile umfasst, die dazu ausgebildet sind, überschüssiges Spülgas kreisförmig symmetrisch aus dem Gaspolster zu entfernen, um zu verhindern, dass dieses überschüssige Spülgas in die Messkammer (4) eintritt.

6. Gasanalysator (1) nach einem der Ansprüche 1 bis 5, der dazu ausgebildet ist, die Filterwand (5) durch Beaufschlagen des Einlasses (21) mit Spülgas unter hohem Druck, z.B. mehr als 2 bar, zu reinigen.

7. Gasanalysator (1) nach einem der Ansprüche 1 bis 6, der für eine in-situ-Kalibrierung durch Einleiten eines Referenzgases in die Messkammer (4) von dem Gasauslass (22) und/oder dem Gaseinlass (21) vorbereitet ist.

8. Verfahren zum Verwenden eines Gasanalysators nach Anspruch 1, **gekennzeichnet durch** die folgenden Schritte,
Anlegen eines Überdrucks an das Reingas (+P), das der Spülkammer (A) durch den Gaseinlass (21) zugeführt wird;
Anlegen eines Unterdrucks an das Gasgemisch (-2P) aus Spülgas und Prozessgas ohne Schwebstoffteilchen (-P) aus dem Gasauslass (22) der Saugkammer (B), was dazu führt, dass der aus der Saugkammer (B) **durch** den Auslass (22) gesaugte Gasfluss höher ist als der Gasfluss des dem Gaseinlass (21) zugeführten Spülgases; und
Verwenden des Steuergeräts, um den Gasfluss **durch** die Einlässe (21) und die Auslässe (22) zu steuern, wobei der Druck der Gasmedien (-2P, -P, P, +P) als Eingaben in das Steuergerät verwendet wird, um so zu verhindern, dass das Reingas (+P) in die Messkammer eintritt, und um die optischen Komponenten (62, 63) vor korrosiven Komponenten in dem Prozessgas ohne Schwebstoffteilchen (-P) zu schützen.

9. Verfahren nach Anspruch 8, wobei der aus der Saugkammer (B) durch den Auslass (22) gesaugte Gasfluss um mehr als 100 Prozent höher ist als der dem Gaseinlass (21) zugeführte Spülgasfluss.

10. Verfahren nach Anspruch 8, wobei der aus der Saugkammer (B) durch den Auslass (22) gesaugte Gasfluss um mehr als 200 Prozent höher ist als der dem Gaseinlass (21) zugeführte Spülgasfluss.

## Revendications

1. Analyseur de gaz (1) pour mesures optiques in situ de gaz de procédé comprenant de la poussière et d'autres particules, l'analyseur de gaz (1) comprenant
un tuyau (3) ;
une chambre de mesure (4), préparée pour la mesure du gaz de procédé, au centre du tuyau (3) ; et
des composants optiques (61, 62, 63, 64) à chaque extrémité longitudinale du tuyau (3),
**caractérisé par**
le tuyau (3) comprenant une paroi filtrante (5) séparant le gaz de procédé environnant (P) de la chambre de mesure (4) de façon que la poussière et d'autres matières particulaires soient écartées lorsque le gaz de traitement sans matières particulaires (-P) se déplace vers la chambre de mesure (4) ;
une chambre de purge (A) comprenant une entrée de gaz (21), positionnée sur les deux côtés longitudinaux entre les composants optiques (62, 63) et une chambre d'aspiration (B), préparée pour produire un coussin de gaz avec un gaz propre (+P), pour protéger les composants optiques (62, 63) contre des composants corrosifs dans le gaz de procédé sans matières particulaires (-P) ;
une chambre d'aspiration (B) préparée pour produire un schéma d'aspiration pour le gaz propre (+P) provenant de la chambre de purge (A) et le gaz de procédé sans matières particulaires (-P) provenant de la chambre de mesure (4) formant dans la chambre d'aspiration (B) un mélange gazeux (-2P), et ainsi empêchant globalement le gaz propre (+P) d'entrer dans la chambre de mesure (4), la chambre d'aspiration (B) comprenant une sortie de gaz (22), positionnée entre la chambre de purge (A) et la chambre de mesure (4), préparée pour produire un schéma d'aspiration pour empêcher globalement le gaz propre (+P) d'entrer dans la chambre de mesure (4) ; et
un contrôleur contrôlant l'écoulement de gaz à travers les entrées (21) et les sorties (22), dans lequel la pression des milieux gazeux (-2P, -P, P, +P) est utilisée en tant qu'entrées vers le contrôleur.

2. Analyseur de gaz selon la revendication (1), dans lequel l'entrée de gaz (21) est en communication de gaz avec un anneau circulaire périphérique compris dans la chambre de purge (A), l'anneau comprenant une fente circulaire orientée vers l'intérieur fonctionnant comme une vanne, préparé pour produire un coussin de gaz symétrique circulairement protégeant les composants optiques (62, 63) contre des composants corrosifs dans le gaz de procédé sans matières particulaires (-P).

3. Analyseur de gaz selon la revendication (1), dans lequel l'entrée de gaz (21) est en communication de gaz avec un anneau circulaire périphérique compris dans la chambre de purge (A), l'anneau comprenant des vannes positionnées symétriquement circulairement, préparé pour produire un coussin de gaz symétrique circulairement protégeant les composants optiques (62, 63) contre des composants corrosifs dans le gaz de procédé sans matières particulaires (-P).

4. Analyseur de gaz (1) selon l'une quelconque des revendications 1 à 3, dans lequel la sortie de gaz (22) est en communication de gaz avec un anneau circulaire périphérique compris dans la chambre d'aspiration (B), l'anneau comprenant une fente circulaire orientée vers l'intérieur fonctionnant comme une vanne, préparé pour retirer le gaz de purge en excès symétrique circulairement à partir du coussin de gaz afin d'empêcher ce gaz de purge en excès d'entrer dans la chambre de mesure (4).

5. Analyseur de gaz (1) selon l'une quelconque des revendications 1 à 3, dans lequel la sortie de gaz (22) est en communication de gaz avec un anneau circulaire périphérique compris dans la chambre d'aspiration (B), l'anneau comprenant des vannes positionnées symétriquement circulairement, préparé pour retirer le gaz de purge en excès symétrique circulairement à partir du coussin de gaz afin d'empêcher ce gaz de purge en excès d'entrer dans la chambre de mesure (4).

6. Analyseur de gaz (1) selon l'une quelconque des revendications 1 à 5, préparé pour nettoyer ladite paroi filtrante (5) par application d'un gaz de purge sous pression élevée, par exemple supérieure à 2 bars, à l'entrée (21).

7. Analyseur de gaz (1) selon l'une quelconque des revendications 1 à 6, préparé pour un étalonnage in situ par introduction d'un gaz de référence dans la chambre de mesure (4) à partir d'au moins l'une parmi la sortie de gaz (22) et l'entrée de gaz (21).

8. Procédé pour utiliser un analyseur de gaz de la revendication 1, **caractérisé par** les étapes suivantes :
application d'une surpression au gaz propre (+P) fourni à la chambre de purge (A) par l'intermédiaire de l'entrée de gaz (21) ;
application d'une sous-pression au mélange gazeux (-2P) de gaz de purge et de gaz de procédé sans matières particulaires (-P) à partir de la sortie de gaz (22) de la chambre d'aspiration (B) qui a pour résultat que l'écoulement de gaz aspiré hors de la chambre d'aspiration (B) par l'intermédiaire de la sortie (22) est supérieur à l'écoulement de gaz du gaz de purge fourni à l'entrée de gaz (21) ; et
utilisation du contrôleur pour contrôler l'écoulement de gaz à travers les entrées (21) et les sorties (22), utilisant la pression des milieux gazeux (-2P, -P, P, +P) en tant qu'entrées au contrôleur de façon à empêcher le gaz propre (+P) d'entrer dans la chambre de mesure, et pour protéger les composants optiques (62, 63) contre des composants corrosifs dans le gaz de procédé sans matières particulaires (-P).

9. Procédé selon la revendication 8, dans lequel l'écoulement de gaz aspiré hors de la chambre d'aspiration (B) par l'intermédiaire de la sortie (22) est supérieur de plus de 100 % à l'écoulement de gaz du gaz de purge fourni à l'entrée de gaz (21).

10. Procédé selon la revendication 8, dans lequel l'écoulement de gaz aspiré hors de la chambre d'aspiration (B) par l'intermédiaire de la sortie (22) est supérieur de plus de 200 % à l'écoulement de gaz du gaz de purge fourni à l'entrée de gaz (21).
